# EUROPÄISCHE PATENTANMELDUNG

(11) **EP 3 091 549 A1**
(43) Veröffentlichungstag der Anmeldung: **09.11.2016**
(21) Anmeldenummer: 16160636.3
(22) Anmeldetag: 16.03.2016
(51) Int. Cl.: H01H 9/18, H02G 3/08

(54) **INSTALLATIONSGERÄT DER HAUS- ODER GEBÄUDEINSTALLATIONSTECHNIK MIT ERWEITERTER FUNKTIONALITÄT**

(30) Priorität: 07.05.2015 DE 102015005735; 16.06.2015 DE 102015109579
(71) Anmelder: ABB AG, 68309 Mannheim (DE)
(72) Erfinder: Wieske, Stefan, 58285 Gevelsberg (DE); Lehnert, Christian, 58239 Schwerte (DE); Fröhling, Marcel, 58579 Schalksmühle (DE); Krummel, Holger, 58515 Lüdenscheid (DE)

(57) **Zusammenfassung**

Die Erfindung betrifft ein Installationsgerät (100, 102, 104, 106, 108, 110, 112) der Haus- oder Gebäudeinstallationstechnik mit erweiterter Funktionalität für die Gebäudesystemtechnik mit einem Schalt- oder Funktionseinsatz (42), einem Gehäuseteil (18) und Kontaktklemmen (50) für einen Anschluss an externe Anschlussleitungen und einem Abdeckrahmen (32).

Es wird vorgeschlagen, dass wenigstens ein elektrisches Funktionsmodul (28) vom Abdeckrahmen (32) aufgenommen ist und der Abdeckrahmen (32) mit dem Schalt- oder Funktionseinsatz (42) durch elektrische Kontaktmittel, insbesondere Kontaktstifte (40, 74, 80), Kontaktfedern (56, 82) oder Kontaktflächen (34, 86) durch Aufsetzen und Befestigen des Abdeckrahmens (32) auf dem Funktionseinsatz (42) elektrisch kontaktiert ist.

## Beschreibung

Die Erfindung betrifft ein elektrisches oder mechanisches Installationsgerät der Haus- oder Gebäudeinstallationstechnik mit erweiterter Funktionalität für die Gebäudesystemtechnik gemäß dem Oberbegriff des Anspruchs 1. Das erfindungsgemäße Installationsgerät kann beispielsweise als Installationsschalter oder -taster, Dimmer oder Steckdose ausgeführt sein. Weiterhin betrifft die Erfindung einen Abdeckrahmen für ein Installationsgerät der Haus- oder Gebäudeinstallationstechnik mit wenigstens einem Funktionsmodul für Zusatzfunktionen der Gebäudesystemtechnik.

Die Erfindung geht von einem elektromechanischen Gerät der Elektroinstallationstechnik aus, welches beispielsweise aus einem Funktionseinsatz als Schalteinsatz mit darauf angeordnetem Tragrahmen bzw. Tragring und einem auf den Schalteinsatz aufsteckbarem Bedienteil oder einem Funktionseinsatz als Steckdoseneinsatz mit einer zentral aufgebrachten Steckdosenabdeckung aufgebaut ist. Das Installationsgerät wird komplettiert durch einen Abdeckrahmen, welcher üblicherweise lediglich als Designelement unterschiedlicher Schalterprogramme genutzt wird. Der Abdeckrahmen dient dazu, eine Abdeckung des Funktionseinsatzes zur umgebenden Wand bzw. Montagedosenberandung bereitzustellen, und beispielsweise mehrere, neben- oder übereinander angeordnete Funktionseinsätze in einem einheitlichen Rahmendesign einzufassen.

Derartige Installationsgeräte sind beispielsweise aus der DE 25 21 753 C3 als beleuchtete elektrische Installationsgeräte, umfassend einen Gerätesockel mit darauf montiertem Tragrahmen und einem Schalteinsatz sowie Kontaktelementen für einen Anschluss an externe Anschlussleitungen und dem Abdeckrahmen, bekannt. Die dort beschriebenen Schalter oder Taster sind mit einem Betätigungsglied, das mit den Funktionsteilen des Schalteinsatzes zusammenwirkt, und mit einem Beleuchtungselement versehen, welches im Schalteinsatz angeordnet ist.

Weiterhin sind elektrische Installationsgeräte bekannt, die einen Gerätesockel für einen Steckdoseneinsatz aufweisen. Auch hier ist der Gerätesockel mit einem Tragrahmen ausgestattet und wird in einem Installationsgeräteeinsatz mittels des Tragrahmens befestigt sowie durch einen Abdeckrahmen komplettiert.

Als Abdeckrahmen sind sowohl 1-fach-Abddeckrahmen, 2-fach-Abdeckrahmen oder Mehrfach-Abdeckrahmen bekannt.

Es existieren bereits elektrische Installationsgeräte, die mit Gerätefunktionen ausgestattet sind. Dazu zählen beispielsweise Präsenzmelder und Bedienschalter mit Temperaturanzeige bzw. Temperaturregelung. Typischerweise sind diese Geräte mit einer lokalen Anzeige zur Messwertdarstellung ausgestattet oder verfügen über eine Funkkommunikation. Diese Gerätefunktionen sind entweder in dem Funktionseinsatz integriert, oder in einem Zusatzmodul des Funktionseinsatzes, das am Funktionseinsatz angeordnet werden kann, untergebracht. Hierdurch wir der beengte Bauraum des Funktionseinsatzes ausgefüllt, und weitere Funktionen können nicht vorgesehen werden. Auch wird der Installationsaufwand erhöht und die Installationszeit heraufgesetzt. Oftmals können die Funktionsmodule aufgrund des erhöhten Verkabelungsaufwands nur schwer in eine Montagedose eingesetzt werden und es kommt zu Fehlfunktionen aufgrund schlechter Kontaktierung, Verletzung der Kabelisolation oder unzureichend eingesetztem Funktionseinsatzes.

Der Erfindung liegt demgemäß die Aufgabe zugrunde, ein Installationsgerät der Hausoder Gebäudeinstallationstechnik bereitzustellen, welcher in einfacher Weise mit zusätzlichen Funktionalitäten der Gebäudesystemtechnik in einem Funktionsmodul erweitert werden kann, wobei der Bauraum des Funktionseinsatzes nicht beeinträchtigt wird und das Funktionsmodul einfach und zeitsparend sowie fehlsicher zu installieren ist. Insbesondere sollen die elektromechanischen Ausprägungen der Installationsgeräteteile einfach und zeitsparend sowie fehlsicher zu installieren sein.

Diese Aufgabe wird erfindungsgemäß durch ein elektrisches oder mechanisches Installationsgerät der Haus- oder Gebäudeinstallationstechnik mit erweiterter Funktionalität für die Gebäudesystemtechnik mit den Merkmalen des Anspruches 1 gelöst. Vorteilhafte Ausgestaltungen der Erfindung ergeben sich aus der Beschreibung, den Figuren und den weiteren Ansprüchen.

Die Erfindung geht aus von einem Installationsgerät der Haus- oder Gebäudeinstallationstechnik mit erweiterter Funktionalität für die Gebäudesystemtechnik mit einem Schalt- oder Funktionseinsatz, einem Gehäuseteil und Kontaktklemmen für einen Anschluss an externe Anschlussleitungen und einem Abdeckrahmen.

Erfindungsgemäß ist wenigstens ein elektrisches Funktionsmodul vom Abdeckrahmen aufgenommen. Der Abdeckrahmen kontaktiert elektrisch mit dem Schalt- oder Funktionseinsatz durch elektrische Kontaktmittel, insbesondere Kontaktstifte, Kontaktfedern oder Kontaktflächen durch Aufsetzen und Befestigen des Abdeckrahmens auf dem Funktionseinsatz.

Mit anderen Worten wird ein Installationsgerät mit einem in einer Montagedose, z.B. Unterputzdose oder Aufputzdose, einbaubarem Funktionseinsatz, wie ein Schalter, Taster, Dimmer, Steckdose, Netzwerk-, Telefon-, oder sonstige Anschlussdose vorgeschlagen, die durch einen Abdeckrahmen berandet abdeckbar ist, wobei bei Montage, d.h. aufsetzen und befestigen des Abdeckrahmens auf dem Funktionseinsatz, eine elektrische Verbindung zwischen einem im Abdeckrahmen integrierten oder angebrachten Funktionsmodul und dem Funktionseinsatz oder ein am Funktionseinsatz anbringbares Zusatzmodul hergestellt. Hierdurch wird eine aufwändige Verkabelung und leitungsgebundene Kontaktierung vermieden und es kann eine schnelle, fehlerfreie und zuverlässige Kontaktierung des Funktionsmoduls mittels lösbarer Kontaktierungsmittel gewährleistet werden.

Die Kontaktierung dient vornehmlich der Stromversorgung des im oder am Abdeckrahmen integrierten Funktionsmoduls, es können des Weiteren Steuer- oder Messsignale vom Funktionsmodul empfangen und/oder gesendet werden. Die Erzeugung oder Verarbeitung dieser Signale kann im Funktionsmodul oder einem Zusatzmodul des Funktionsmoduls erfolgen, oder kann über die vorhandene Installationsverdrahtung an das Installationsnetzwerk weitergeleitet werden.

Dabei ist der Abdeckrahmen mit wenigstens einem Bauraum ausgestattet, in welchem wenigstens ein Funktionsmodul, beispielsweise ein Beleuchtungs-, Anzeige-, Schalt-, Sensor- und/oder Funkmodul, integriert ist, um Zusatzfunktionen, wie Beleuchtung-, Anzeige-, Schalt-, Mess- und/oder Übertragungsfunktionen, der Gebäudesystemtechnik zu realisieren. Das Funktionsmodul kann rückseitig, seitlich oder vorderseitig am oder im Abdeckrahmen angebracht bzw. eingesteckt sein. Vorzugsweise ist das Funktionsmodul im Abdeckrahmen verliersicher integriert, beispielsweise eingespritzt. Durch eine Befestigung des Abdeckrahmens am Funktionseinsatz oder an einem den Funktionseinsatz aufnehmende Montagedose (UP - Unterputz oder AP - Aufputz), entweder mittels einer oder mehrerer Schraubverbindungen oder einer oder mehrerer Klemm-, Rastoder Clipverbindungen oder ggf. über ein zusätzliches Befestigungselement, wird über Kontaktmittel eine elektrisch leitende, in der Regel zwei- oder mehrpolige Verbindung zwischen im Abdeckrahmen befindlichem Funktionsmodul und dem Funktionseinsatz oder einem Zusatzmodul des Funktionseinsatzes hergestellt.

Das erfindungsgemäße elektrische oder mechanische Installationsgerät mit erweiterter Funktionalität für die Gebäudesystemtechnik ist insbesondere anwendbar auf bestehende Wippen, Steckdosen oder Schaltersockel. Dazu ist das Funktionsmodul hinter dem Sockel zur Kontaktierung angeordnet. Beispiele dafür sind eine Steckdose mit hinten aufgesetztem Modul und modifizierter C-Scheibe zur Kontaktierung des Moduls durch den Tragrahmen, ein mechanischer Schalter mit ansetzbarem Busankoppler.

Weiterhin ist das erfindungsgemäße elektrische oder mechanische Installationsgerät mit erweiterter Funktionalität anwendbar auf Installationsgeräte, die einen Gerätesockel mit einem Tragrahmen ausweisen, also auf bestehende Rahmengeometrien des Tragrahmens mit elektrischen Kontaktmitteln. Das das Funktionsmodul kann dann als sogenannten "Rucksackelektronik" nachgerüstet werden und beispielsweise eine vorhandene Tragrahmengeometrie mit elektrischen Kontaktflächen bzw. Durchstoßpunkten nutzen.

Auch können bei Installationsgeräten, die bereits mit einer "Rucksackelektronik" ausgestattet sind, der Tragrahmen mit seinen vorhandenen elektrischen Kontaktmitteln genutzt werden. Dadurch wird ein vereinfachter Aufbau und universelle Nutzung ermöglicht. Der Tragrahmen kann aus einem, insbesondere teilweise, nicht-leitendem Material, wie Kunststoff, gebildet sein.

In einer vorteilhaften Weiterbildung kann das oder können die Kontaktmittel eine mechanische Verbindung von Abdeckrahmen und Funktionseinsatz herstellen. Dabei kann die Schraub-, Klemm-, Clips-, oder Rastverbindung elektrisch leitende Elemente umfassen, die die elektrische Kontaktierung herstellen und die Teil der Kontaktmittel sind. So kann über eine Befestigungsschraube, z.B. einer zentralen Abdeckung einer Schuko-Steckdose, eine elektrische Verbindung hergestellt werden. Auch umfasst ein Befestigungselement, das einen Abdeckrahmen mit einem Tragrahmen eines Schalter verbindet, in der Regel vier Klemmzungen, die in Klemmschlitze des Tragrahmens eingreifen, so dass bis zu vier elektrisch leitende Verbindungen über die Klemmzungen und die Klemmschlitze geführt werden können.

In einer weiteren vorteilhaften Weiterbildung kann der Abdeckrahmen durch ein Befestigungselement am Funktionseinsatz befestigt sein, wobei das Befestigungselement Kontaktmittel umfasst. Ein Befestigungselement verbindet den Abdeckrahmen mit dem Tragrahmen eines Schalters, wonach auf eine Schalterwippe ein Wippenelement zur Abdeckung aufgesetzt wird. Das Befestigungselement kann Kontaktmittel umfassen, die elektrische Verbindungen zwischen Abdeckrahmen und Funktionseinsatz herstellen und übernimmt eine Doppelfunktion einer mechanischen Arretierung und einer elektrischen Kontaktierung. Der Abdeckrahmen ist mittelbar über das Befestigungselement mit dem Funktionseinsatz kontaktiert.

In einer bevorzugten vorteilhaften Weiterbildung der vorherigen Ausführungsform kann der Abdeckrahmen zumindest zwei Kontaktflächen auf einer dem Funktionseinsatz abgewandten Seite aufweisen, und das Befestigungselement komplementär hierzu mit den Abdeckrahmen-Kontaktflächen kontaktierbare Befestigungselement-Kontaktflächen auf einer dem Funktionseinsatz zugewandten Seite aufweisen. Das Befestigungselement kann zum Befestigen in den Abdeckrahmen ein- oder aufsetzbar und mechanisch mit dem Funktionseinsatz verbindbar sein. Somit weist der Abdeckrahmen auf seiner Oberseite zumindest ein oder mehrere Kontaktflächen auf, und das Befestigungselement weist auf seiner Unterseite, die dem Funktionseinsatz zugewandt ist, ebenfalls Kontaktflächen auf, die bei einer mechanische Verbindung von Befestigungselement mit dem Funktionseinsatz eine elektrische Verbindung zwischen Abdeckrahmen und Befestigungselement herstellen. Anstelle von Kontaktflächen kann auch eine Blattfederverbindung oder eine Verbindung mit Kontaktstiften oder Kontaktfedern gewählt werden. Hierdurch wird eine sichere und einfach herstellbare mechanische Verbindung geschaffen.

Um einen Verpolungsschutz zu gewährleisten, kann durch geeignete mechanische Maßnahmen, wie formkomplementäre Vorsprünge und Ausnehmungen, sichergestellt werden, dass Funktionseinsatz, Abdeckrahmen und/oder Befestigungselement lagerichtig miteinander verbunden sind, so dass elektrische Kontaktfehler vermieden werden können.

In einer vorteilhaften Weiterbildung kann das Befestigungselement zumindest ein oder zwei Befestigungselement-Kontaktstifte aufweisen, die mit Kontaktbuchsen des Funktionseinsatzes oder eines am Funktionseinsatz anbringbaren Zusatzmodul kontaktierbar sind. Alternativ oder zusätzlich kann das Befestigungselement zumindest ein oder zwei Befestigungselement-Kontaktfedern aufweisen, die mit Kontaktflächen des Funktionseinsatzes oder eines am Funktionseinsatz anbringbaren Zusatzmoduls kontaktierbar sind. Kontaktstifte stellen durch eine Klemmwirkung in der korrespondierenden Kontaktbuchse am Funktionseinsatz eine zuverlässige elektrische Verbindung und eine mechanische Befestigung des Abdeckrahmens zur Verfügung. Durch eine entsprechende Anordnung von zwei oder mehreren Kontaktstiften kann ein Verpolungsschutz gewährleistet werden.

In einer vorteilhaften alternativen Weiterbildung kann das Befestigungselement mittels zumindest einer Klemmzunge oder einer Schraube mit dem Funktionseinsatz befestigbar sein, wobei die Klemmzunge und/oder die Schraube Teil eines Kontaktmittels ist. Hierbei ist es weiterhin vorteilhaft, dass Bereiche des Tragrahmens des Funktionseinsatzes oder Gewindebereiche des Funktionseinsatzes aus isolierendem Material wie Kunststoff bestehen, um Kurzschlüsse zu vermeiden. Die mechanischen Verbindungsmittel dienen gleichzeitig als Kontaktmittel, so dass bei der Montage eine zuverlässige Kontaktierung hergestellt wird. Zusätzliche Kontaktmittel können vermieden werden, die Bauteilkomplexität und Fehleranfälligkeit wird hierdurch verringert und Gleichteile können verwendet werden, so dass die erforderliche Bauteilzahl für eine Installation gleichbleibt.

In einer vorteilhaften Weiterbildung kann der Abdeckrahmen einen mechanisch integrierten, insbesondere einstückig angeformten Stecker aufweisen, der beim Befestigen des Abdeckrahmens eine Buchse des Funktionseinsatzes oder eines Zusatzmoduls kontaktiert. Der Abdeckrahmen weist einen Stecker auf, der in den Funktionseinsatz eintaucht und am Funktionseinsatz eine dort integrierte Buchse kontaktiert, oder eine an einem Zusatzmodul angeordnete Buchse kontaktiert. Die Stecker- Buchsenverbindung kann gleichzeitig die mechanische Befestigung bereitstellen oder unterstützen. Der Stecker kann einstückig mit dem Abdeckrahmen ausgeformt sein oder nachträglich angeklebt, angeschweißt oder angeclipst sein. Durch eine Stecker-Buchsenverbindung kann eine große Anzahl von Verbindungen hergestellt werden, wobei insbesondere Kleinsignalströme oder Sensorsignal störungsfrei übertragen werden können.

In einer vorteilhaften Weiterbildung kann der Abdeckrahmen zumindest eine oder zwei in Richtung Funktionseinsatz angeformte Kontaktstifte umfassen, die mit korrespondierenden Kontaktbuchsen des Funktionseinsatzes oder eines am Funktionseinsatz anbringbaren Zusatzmodul kontaktierbar sind. Alternativ oder zusätzlich kann der Abdeckrahmen zumindest eine oder zwei in Richtung Funktionseinsatz gerichtete Kontaktfedern aufweisen, die mit korrespondierenden Kontaktflächen des Funktionseinsatzes oder eines am Funktionseinsatz anbringbaren Zusatzmodul kontaktierbar sind. Alternativ oder zusätzlich kann der Abdeckrahmen zumindest ein oder zwei in Richtung Funktionseinsatz angeordnete Kontaktflächen aufweisen, die mit Kontaktflächen des Funktionseinsatzes oder eines am Funktionseinsatz anbringbaren Zusatzmodul kontaktierbar sind. Somit kontaktieren unmittelbar am Abdeckrahmen angeordnete Kontaktmittel mit dem Funktionseinsatz oder einem Zusatzmodul, wobei die Kontaktmittel fest eingebaut, z.B. angespritzt oder angeklebt sein können, oder nachträglich angeclipst, angeschraubt oder eingeschoben sein können. Hierdurch kann eine direkte Verbindung zwischen im Abdeckrahmen integriertem Funktionsmodul und dem in der Installationsdose befindlichen Funktionseinsatz hergestellt werden, wobei je nach Funktionsmodul verschiedenartige Kontakte vorgesehen sein können. Eingeschobene oder angeclipste Kontaktmittel können an herkömmliche Abdeckrahmen angebracht sein, so dass die Bauteilzahl reduziert bleibt, und bei Mehrfach-Kombinationsrahmen, lediglich einzelne zu kontaktierende Funktionseinsätze kontaktiert werden können.

In einer vorteilhaften Weiterbildung kann das oder können die Kontaktmittel in einem Spritzgießverfahren am Abdeckrahmen und/oder am Befestigungselement angeformt sein. Alternativ können die Kontaktmittel wie Kontaktstifte, Kontaktfedern, Kontaktflächen, Tellerfedern etc. von einem eigenständigen Spritzgussteil aufgenommen sein, welches an den Rahmen clipsbar, einschiebbar oder anschraubbar ist. Alternativ kann das Spritzgussteil an den Rahmen angeklebt sein, wodurch in vorteilhafter Weise eine problemlose Nachrüstung an jedem Rahmen gegeben ist. Hierdurch können universelle Abdeckrahmen nachträglich für eine Kontaktierung konfiguriert werden.

In einer vorteilhaften Weiterbildung kann ein Tragrahmen des Funktionseinsatzes zumindest bereichsweise aus nichtleitendem Material bestehen. Somit können Kontaktflächen oder Kontaktstifte auf der Oberseite des Funktionseinsatzes eingelassen, umspritzt oder eingerastet sein. Alternativ können auch Durchbrüche im Funktionseinsatz realisiert sein, welche die eingesetzten Kontaktflächen oder Kontaktstifte durch das Gehäuseteil oder den Geräteeinsatz des Funktionseinsatzes zu den Kontaktelementen führen. Der Tragrahmen dient somit zur Kontaktierung von Kontaktstiften, Kontaktfedern, Kontaktbuchsen oder Kontaktflächen, da dieser Fläche zur Kontaktierung bietet und der Tragrahmen in der Regel vom Abdeckrahmen überdeckt wird, so dass eine einfache Kontaktmöglichkeit gegeben ist. Um Kurzschlüsse zu vermeiden, ist der Bereich, der die Kontaktmittel trägt, ansonsten aus einem nichtleitenden Material wie Kunststoff, Keramik oder ähnliches hergestellt. Auch kann der Tragrahmen isolierte Ausnehmungen aufweisen, durch die die Kontaktmittel des Abdeckrahmens hindurchtauchen können.

In einer vorteilhaften Weiterbildung kann das Installationsgerät als Unterputz- oder Aufputzschalter, -taster, -dimmer oder -steckdose ausgeführt sein. Es ist auch eine Ausführung als Telefon-, Netzwerk- oder sonstige Anschlussdose möglich. Dabei unterscheidet sich insbesondere Art und Aufbau des Funktionseinsatzes sowie die auf den Funktionseinsatz aufgesetzte Zentralabdeckung, die wiederum vom Abdeckrahmen umfasst ist. Im Falle eines Schalters, Tasters oder Dimmers stellt die Zentralabdeckung das betätigbare mechanische Element dar, im Falle einer Anschlussdose oder Steckdose umfasst die Zentralabdeckung Ausnehmungen zur Aufnahme eines oder mehrerer Stecker, die Kontakt des Funktionseinsatzes kontaktieren. Der Abdeckrahmen ist in der Regel von der Zentralabdeckung mechanisch am Funktionseinsatz befestigt, kann aber auch alternativ direkt am Funktionseinsatz angeschraubt oder angeclipst sein.

In einem nebengeordneten Aspekt wird ein Abdeckrahmen für ein Installationsgerät der Haus- oder Gebäudeinstallationstechnik, wie vorstehend beschrieben, vorgeschlagen, insbesondere ein 1-fach-, 2-fach- oder Mehrfach-Abdeckrahmen, der ein Funktionsmodul für Zusatzfunktionen der Gebäudesystemtechnik und Kontaktmitteln zum Kontaktieren an einen Funktionseinsatz umfasst. Der Abdeckrahmen kann hergerichtet sein, in einem herkömmlichen Installationsgerät oder einem Installationsgerät mit Zusatzmodul im Abdeckrahmen eingesetzt zu werden, so dass keine Zusatz-Abdeckrahmen vorgesehen sein müssen. Insbesondere kann der Abdeckrahmen vorgesehen sein, die Kontaktmittel und das Zusatzmodul zusätzlich anbringbar aufzunehmen.

In einem nebengeordneten Aspekt wird ein Funktionseinsatz für ein Installationsgerät der Haus- oder Gebäudeinstallationstechnik, wie vorstehend beschrieben, vorgeschlagen, das Kontaktmittel zum elektrischen Kontaktieren eines Abdeckrahmens mit Funktionsmodul umfasst. Der Funktionseinsatz kann Kontaktflächen, Kontaktfedern, Kontaktstifte oder Kontaktbuchsen umfassen oder kann eine Steckbuchse aufweisen, um korrespondierten Kontaktmittel eines Abdeckrahmens mit Zusatzmodul zu kontaktieren.

Die neue Rahmenvariante kontaktiert beim Aufsetzen auf einem Funktionseinsatz selbsttätig durch ihre Kontaktmittel, die z.B. Kontaktflächen, Kontaktfedern oder Kontaktstifte umfassen, den Funktionseinsatz, der deckungsgleich korrespondierende Kontaktflächen oder Kontaktbuchsen umfasst. Somit wird eine elektrisch leitende Verbindung zwischen dem im Rahmen befindlichem Sensor- und/oder Funkmodul und den Kontaktelementen für einen Anschluss an externe Anschlussleitungen bereitgestellt, der schnell, einfach und zuverlässig bei geringer Fehleranfälligkeit montierbar ist.

Ist auf den Gerätesockel ein Tragring oder Tragrahmen montiert, kann auch vorgesehen sein, isolierte Kontaktflächen oder Kontaktstifte durch Öffnungen im Tragring zu den Kontaktelementen zu führen.

Bei den vorab beschriebenen Ausführungsformen zum Betrieb des Funktionsmoduls wird die Energieversorgung über Anschlussklemmen des Schalter- oder Funktionseinsatzes realisiert, wobei die Spannung direkt über die Kontaktmittel an das Funktionsmodul weitergegeben werden kann, oder z.B. durch einen Spannungswandler im Funktionseinsatz auf eine passende Spannung umgesetzt werden kann.

Dadurch, dass im oder am Rahmen des Installationsgerätes das Funktionsmodul, z.B. Sensor- und/oder Funkmodul untergebracht ist, können eine Vielzahl von Zusatzfunktionen der Gebäudesystemtechnik realisiert werden. Dazu zählen beispielsweise:
- Sendefunktionen, wobei das Sensor-/Funkmodul als Infrarot-Sender, Ultraschallsender, usw. genutzt wird;
- Messfunktionen zur Erfassung von Raum- oder Außentemperatur, je nachdem ob es sich um ein Installationsgerät für den Innen- oder Außenbereich handelt;
- Messfunktionen zur Erfassung von Raum- oder Außenluftfeuchte und Luftdruck, je nachdem ob das Installationsgerät für den Innen- oder Außenbereich vorgesehen ist;
- Messfunktionen zur Erfassung von Luftdruck, CO2, CO, NOX, flüchtigen organischen Verbindungen (VOC);
- Messfunktionen zur Erfassung von Umweltgasen, welche das Raumklima zusätzlich zur Temperatur und Luftfeuchte beeinflussen und dazu dienen Gefahrensituationen zu erkennen;
- Messfunktionen zur Erfassung von Druckänderungen in einem Gebäudeteil, beispielsweise, wenn ein Fenster geöffnet wird;
- Messfunktionen zur Erfassung von Druckwellen, welche durch akustische Quellen erzeugt werden und zu denen beispielsweise Lautstärke, Frequenz, Abklingzeit/Nachhall zählen;
- Messfunktionen zur Erfassung von Licht in entsprechenden Spektren, beispielsweise Kunstlicht, Tageslicht, usw.;
- Messfunktionen zur Erfassung von Erschütterungen ausgelöst durch Schließen von Türen, Fenstern oder Laufbewegungen usw., eine Analyse von abgeleiteten Mustern direkt im Sensormodul; und
- Messfunktionen zur Erfassung des Erdmagnetfeldes oder der elektrischen Feldstärke von Sendern mit einer bestimmten Frequenz, beispielsweise um elektronische "Licht"-Schranken zu realisieren.

Durch die Integration des Sensor- und/oder Funkmoduls mit der entsprechenden Messund/oder Sendefunktion in oder am Rahmen des Installationsgerätes steht eine permanente Energieversorgung (z.B. 230 V; als 2- und 3-Draht-Version) zur Verfügung, welche die Messfunktion als auch Sende-/Übertragungsfunktion sicherstellt.

Das Funkmodul nutzt beispielsweise folgende Übertragungstechniken:
- Bluetooth (BT), BT Low Energy, BT Smart
- ZigBee, ZigBee Low Energy
- WiFi
- NFC
- ANT/ANT+
- DECT
- HomePlug (GreenPhy)
sowie weitere proprietäre Funklösungen und weitere Powerline Communication Übertragungstechniken.

In einer weiteren Ausgestaltung können die in oder am Rahmen der Installationsgeräte befindlichen einzelnen Funktionsmodule zu einem Funktionsmodul-Netzwerk zusammenschaltbar sein, wodurch gleiche als auch kombinatorische Schaltmöglichkeiten, Messungen, abgestimmtes Aktorenverhalten, Beleuchtungsszenarien nicht nur am selben Ort, sondern an verschiedenen Orten durchführbar sind. Damit lässt sich u.a. die Messreichweite erhöhen und/oder die Genauigkeit und/oder die Messfrequenz verbessern.

Mit dem in den erfindungsgemäßen Installationsgeräten integrierten Sensor- und/oder Funkmodul kann eine Vielzahl von weiteren Anwendungsfeldern bedient werden.

Dazu zählen unter anderem:
- Eine Anwesenheits- und/oder Mustererkennung mittels Bewegung/Beschleunigungssensormodulen und Kombinatorik dieser mit Feldstärkesensormodulen, um beispielsweise Veränderungen des gemessenen Erdmagnetfelds zu detektieren; durch Kombination mit VOC-Sensormodulen, um z.B. Änderungen in der Verteilung der Stoffanteile (Gasanteile) in der Luft zu detektieren.
- Eine Einbruchsmeldung, beispielsweise mittels Luftdrucksensormodulen, welche das Öffnen eines Fensters detektieren und Kombination mit Bewegung/Beschleunigungssensormodulen, Feldstärkesensormodulen und/oder VOC-Sensormodulen.
- Warnmeldungen, beispielsweise mittels Gassensormodulen, welche bestimmte Gaskonzentrationen ermitteln und bei Grenzwertüberschreitung einen Alarm auslösen (z.B. bei Störungen bei Gasfeueranlagen).

Die mit der Erfindung erzielbaren Vorteile bestehen insbesondere darin, dass eine Erweiterung der Installationsgeräte mit Funktionalitäten der Gebäudesystemtechnik, wie beispielsweise Messfunktionen von Umweltbedingungen, ohne konstruktiven/mechanischen Änderungen an den Schaltern/Tastern möglich ist. Durch die Funktionserweiterung kann der Anwendungsbereich des Installationsgerätes deutlich verbessert werden.

Eine einfache Umrüstung bzw. bedarfsgerechte Anpassung bereits installierter Installationsgeräte an neue Anforderungen der Gebäudesystemtechnik, wie der Bereitstellung von Messfunktionen von Umweltbedingungen, von Überwachungsfunktionen, Übertragungsfunktionen und/oder Steuerfunktionen, lässt sich in einfacher Weise realisieren, indem nur der Abdeckrahmen des Installationsgerätes mit einem Abdeckrahmen mit integriertem Sensor- und/oder Funkmodul ausgetauscht wird und Designfaktoren des jeweiligen Schalterprogramms erhalten bleiben.

Dies kann unter Beibehaltung der existierenden Geometrien und mechanisch/elektrischen Funktionen bestehender Schalter durch die Kombination Abdeckrahmen, modifizierte Rucksackelektronik betreffend die elektrische Verbindungen und mechanische Kontaktierung, Geräte- oder Unterputzeinsatz und/oder angesetztes Zusatzmodul zur elektrischen Versorgung und mechanischen Kontaktierung des Rücksacks über den Tragrahmen des Unterputzgerätes, wie beispielsweise in der DE 1 2011 101 385 A1 beschrieben.

Auch auf zusätzliche Installationsorte für die Realisierung der Zusatzfunktionen der Gebäudesystemtechnik kann verzichtet werden.

Durch die Integration einer Energieversorgungseinheit im oder am Rahmen des Installationsgerätes steht eine permanente Energieversorgung durch das Installationsgerät selbst (z.B. 230 V∼; als 2- und 3-Draht Version) zur Verfügung, welche die Messfunktion als auch Übertragungsfunktion gewährleisten.

Mit der Ausstattung des Abdeckrahmens mit dem Sensor- und/oder Funkmodul bleibt die vorhandene Funktion von Schalter, Taster, Dimmer oder Steckdose erhalten, da die vorhandenen Anschlüsse/Einsätze nicht durch die Funktion des im oder am Abdeckrahmen befindlichen Sensor- und/oder Funkmoduls beeinflusst werden.

Die entsprechenden Kontaktstifte können als eigenständige Spritzgussteile an dem Rahmen geclipst, geklebt oder angeschraubt werden. Somit können sie problemlos an bestehende Abdeckrahmen nachgerüstet werden.

Bei der Variante, bei der ein Abdeckrahmen mittels eines Befestigungselements an einem Funktionseinsatz befestigt ist, bietet es sich an, im Rücksprung des Abdeckrahmens auf der Vorderseite Kontaktflächen vorzusehen, die mit entsprechenden Kontaktflächen auf der dem Funktionseinsatz zugewandten Seite des Befestigungselements kontaktieren können. Durch die mechanische Verbindung des Befestigungselements am Funktionseinsatz wird eine zuverlässige elektrische Verbindung zwischen Abdeckrahmen über das Befestigungselement zum Funktionseinsatz hergestellt.

Die Kontaktflächen am Abdeckrahmen sowie am Befestigungselement können ebenfalls eingeclipst oder nachträglich angebracht werden. Kontaktstifte können direkt den Funktionseinsatz kontaktieren, oder können durch ihn hindurch ein Zusatzmodul, das an einer Seite oder an der Rückseite des Funktionseinsatzes angeordnet ist, kontaktieren.

Wird am Abdeckrahmen ein tieftauchender Stecker vorgesehen, so kann vorteilhafterweise am Tragrahmen des Funktionseinsatzes eine Ausnehmung vorgesehen sein, durch die der Stecker hindurchtauchen kann, um eine Buchse am Funktionskörper des Funktionseinsatzes zu kontaktieren, oder eine Buche eines Zusatzmoduls zu kontaktieren.

Sind am Tragrahmen Kontaktflächen vorgesehen, so können diese eingelassen, eingespritzt oder auf dem Tragrahmen angerastet werden, hierzu ist bevorzugt der Tragrahmen aus nicht leitendem Material, beispielsweise Kunststoff oder Keramik, ausgebildet.

Die Erfindung wird nachstehend anhand der in den Zeichnungen dargestellten Ausführungsbeispiele erläutert. Es zeigen:
- **Fig. 1**: eine Explosionsdarstellung eines beispielhaften Installationsgerätes aus dem Stand der Technik,
- **Fig. 2**: Darstellung eines Abdeckrahmens, einer Explosionsdarstellung und eines Installationsgeräts einer ersten Ausführungsform der Erfindung;
- **Fig. 3**: Darstellung eines Abdeckrahmens und einer Explosionsdarstellung einer zweiten Ausführungsform der Erfindung;
- **Fig. 4**: Darstellung eines Abdeckrahmens, einer Explosionsdarstellung und eines Installationsgerätes einer dritten Ausführungsform der Erfindung;
- **Fig. 5**: Abdeckrahmen und Funktionseinsatz einer vierten Ausführungsform der Erfindung;
- **Fig. 6**: Abdeckrahmen und Explosionsdarstellung eines Installationsgerätes einer fünften Ausführungsform der Erfindung;
- **Fig. 7**: Abdeckrahmen und Funktionseinsatz einer sechsten Ausführungsform der Erfindung;
- **Fig. 8**: Abdeckrahmen, Befestigungselement und Funktionseinsatz einer siebten Ausführungsform der Erfindung.

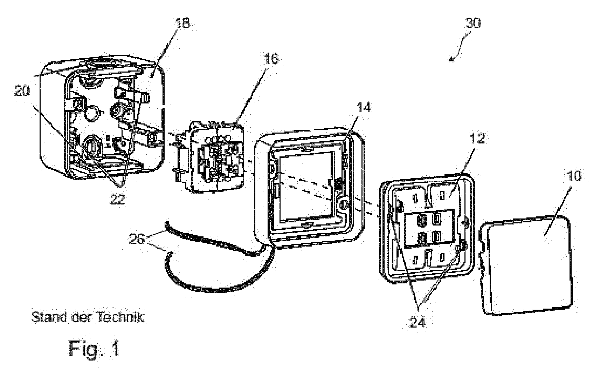

In der **Fig. 1** ist ein aus dem Stand der Technik bekannter mittels eines Wippbedienelement 10 bedienbarer mechanischer Feuchtraumschalter 30 in Explosionsdarstellung dargestellt. Der Schalter 30 ist mit einem als Wechselschaltereinsatz ausgebildetem Schalteinsatz 16 und einem zur Aufputzmontage ausgebildetem Dosensockel 18 mit Öffnungen zur Leitungseinführung 20 und Halterungen 22 zur Fixierung des Funktionsoder Schalteinsatzes 16 ausgestattet und durch einen beleuchtetem Abdeckrahmen 14 komplettiert. Zwischen Abdeckrahmen 14 und Wippbedienelement 10 ist eine Dichtung 12 vorgesehen, an deren Bajonett-Drehgelenk-Schnellverschlüsse 24 das Wippbedienelement 10 wippend einclipsbar befestigt wird. Der beleuchtete Abdeckrahmen 14 umfasst zumindest ein Leuchtmittel als Funktionsmodul, das über separat geführte und einzeln am Schalteinsatz 16 anschließbare Anschlussleitungen 26 kontaktierbar ist, und entweder eine Dauerbeleuchtung oder eine Beleuchtung entsprechend einer Einschaltstellung ermöglicht. Die Montage des Schalters 30 ist umständlich, da vor einem Einsetzen des Schalteinsatzes 16 in die Halterungen 22 des Dosensockels 18 die Anschlussleitungen 26 zunächst am Einsatz 16 angeschlossen werden müssen, und somit bereits der Abdeckrahmen 14 im Arbeitsbereich befindlich ist, und die Arbeiten erschwert. Zusätzlich zu den Installationsleitungen müssen die Anschlussleitungen 26 im Dosensockel 18 untergebracht werden, so dass der Installationsraum verengt und ein zuverlässiger Sitz des Einsatzes 16 im Dosensockel 18 gefährdet wird. Des Weiteren besteht die Gefahr, dass Anschlussleitungen 26 beim Aufsetzen des Abdeckrahmens 14 im Gehäusespalt verklemmen oder deren Isolation beschädigt werden, so dass es zu Fehlfunktionen kommt und die Installationsarbeiten erschwert werden.

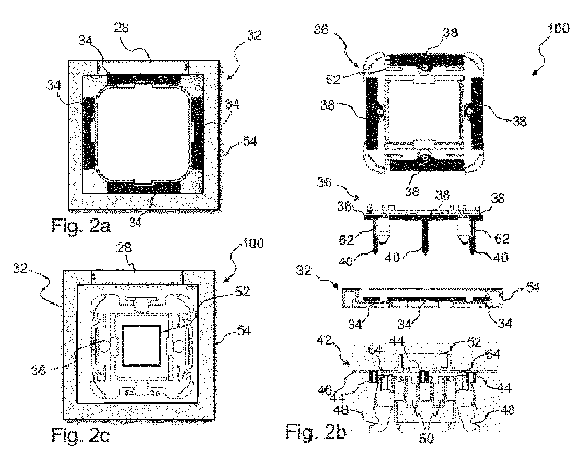

In der **Fig. 2** ist ein erstes Ausführungsbeispiel 100 eines Installationsgeräts der Erfindung dargestellt.

Hierbei zeigt **Fig. 2a** einen Abdeckrahmen 32, der ein Funktionsmodul 28 umfasst. Das Funktionsmodul 28 kann ein Beleuchtungsmodul, ein Schalt- oder Tastmodul, ein Sensormodul oder ein Funkmodul sein. Daneben kann das Funktionsmodul 28 auch ein Schalt- oder Tastmodul sein, um eine elektrische Zusatzfunktion zu aktivieren. Der Abdeckrahmen 32 weist einen Rahmenrand 54 auf, der einen Tragrahmen 46 eines Funktionseinsatzes 42, in diesem Beispiel ein Schalteinsatz, umfasst, und somit einen bündigen Abschluss zur dahinterliegenden Wand oder einem Aufputzgehäuse definiert. Der Abdeckrahmen 32 weist einen Rahmenvorsprung und einen tiefergelegten Rahmensitz auf, wobei im Rahmensitz wenigstens zwei, vorzugsweise vier, symmetrische Kontaktflächen 34 ausgebildet sind.

In der **Fig. 2b** ist eine Explosionsdarstellung eines Befestigungselements 36, des Abdeckrahmens 32 in Schnittdarstellung und eines Funktionseinsatzes 42 als Schalteinsatz dargestellt. Im oberen Teil der Fig. 2b ist eine Rückansicht und eine Seitenansicht eines Befestigungselements 36 dargestellt, das dazu dient, den Abdeckrahmen 32 auf dem Schalteinsatz 42 zu befestigen. Hierzu weist das Befestigungselement 36 wenigstens zwei, vorzugsweise vier, Klemmzungen 62 auf, die in entsprechende Zungenaufnahmen 64 des Schalteinsatzes 42 eingreifen können. Das Befestigungselement 36 wird in den Rahmenrücksprung des Abdeckrahmens 32 eingesetzt, und befestigt klammerartig durch die Kontaktzungen 62 den Abdeckrahmen 32 am Schalteinsatz 42. Auf der Rückseite des Befestigungselements 36 sind ebenfalls symmetrisch Kontaktflächen 38 ausgebildet, die form- und anordungskomplementär zu den Kontaktflächen 34 des Abdeckrahmens 32 sind. Beim Einlegen des Befestigungselements 36 in den Rücksprung des Abdeckrahmens 32 kontaktieren die Kontaktflächen 38 mit den Kontaktflächen 34. Die Kontaktflächen 38 weisen weiterhin elektrisch verbundene Kontaktstifte 40 auf, die durch einen Rücksprung oder Ausnehmung des Abdeckrahmens 32 hindurchgreifen können, und die in Kontaktbuchsen 44 des Schalteinsatzes 42 aufgenommen sind, um eine elektrische Verbindung zwischen Befestigungselement 36 und Schalteinsatz 42 herzustellen. Das Funktionsmodul 28 im Abdeckrahmen 32 ist mit den Kontaktflächen 34 verbunden. Über die Kontaktflächen 38, die mit den Kontaktflächen 34 elektrisch verbunden sind, und die Kontaktstifte 40 des Befestigungselements 36 ist das Funktionsmodul 28 mit den Kontaktbuchsen 44 des Schalteinsatzes 42 verbunden, um dieses elektrisch zur Versorgung und entsprechende Sensor-, Messsignale oder Schaltsignale übermitteln zu können. Der Schalteinsatz 42 weist des Weiteren einen Tragrahmen 46 auf, an dem Befestigungskrallen 48 angeordnet sind, um den Schalteinsatz 42 in einer Unterputzdose oder einer Aufputzdose verankern zu können. Des Weiteren sind Kontaktklemmen 50 vorgesehen, um Installationsleitungen anschließen zu können.
In der Fig. **2c** ist das Installationsgerät 100 im montierten Zustand dargestellt, wobei ein Wippenbedienelement 10 auf der Wippe 52 des Schalteinsatzes 42 fehlt. Das Befestigungselement 36 befestigt den Abdeckrahmen 32 am Funktionseinsatz 42 und stellt die elektrische Verbindung zwischen Funktionsmodul 28 und Schalteinsatz 42 her.

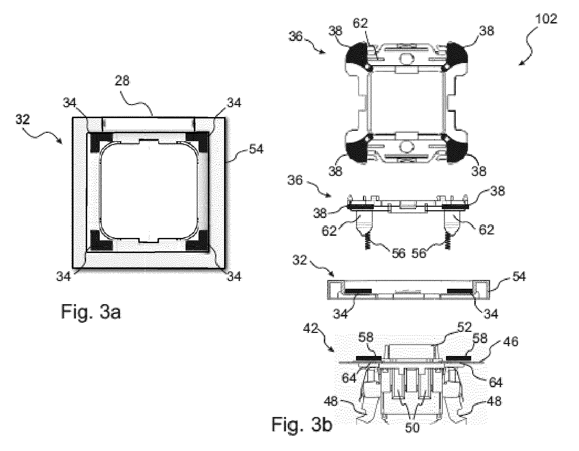

In den **Fig. 3a** und **Fig. 3b** ist eine weitere Ausführungsform eines erfindungsgemäßen Installationsgeräts 102 dargestellt. In ähnlicher Weise wie in dem in **Fig. 2** dargestellten Installationsgerät 100 sind im Abdeckrahmen 32 vier Kontaktflächen 34 jeweils in Ecken des Rücksprungs des Abdeckrahmens 32 vorgesehen. Die Kontaktflächen 34 sind elektrisch mit einem Zusatzmodul 28 im Abdeckrahmen 32 verbunden. Der Abdeckrahmen 32 ist wiederum durch ein Befestigungselement 36 an einem Schalteinsatz 42 befestigt. Formkomplementär zu den Kontaktflächen 34 des Abdeckrahmens 32 sind, wie in **Fig. 3b** dargestellt, Kontaktflächen 38 jeweils an den Ecken des Befestigungselements 36 angeordnet, wobei das Befestigungselement 36 durch Klemmzungen 62 in Zungenaufnahmen 64 des Schalteinsatzes eingreifen kann. An den Kontaktflächen 38 sind Kontaktfedern 56 vorgesehen, die derart angeordnet sind, dass sie im Inneren des Abdeckrahmens 32 durch ihn hindurch auf entsprechende Kontaktflächen 58 des Schalteinsatzes 42 aufsetzen, und diesen elektrisch kontaktieren. Somit ist das Zusatzmodul 28 im Abdeckrahmen 32 über Kontaktflächen 34 des Abdeckrahmens 32, Kontaktflächen 38 des Befestigungselements 36 und Kontaktfedern 56 mit Kontaktflächen 58 des Funktionseinsatzes 42 verbunden.

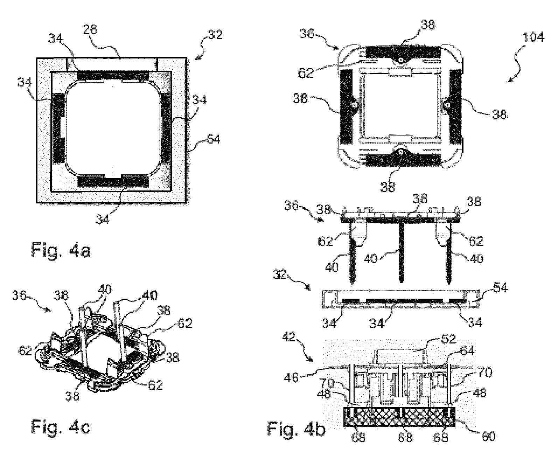

Die **Fig. 4** stellt in drei Teilfiguren 4a, 4b und 4c eine weitere Ausführungsform 104 eines erfindungsgemäßen Installationsgeräts dar.

In der **Fig. 4a** ist ein Abdeckrahmen 32 mit Funktionsmodul 28 dargestellt, der vergleichbar mit dem Abdeckrahmen 32 des Installationsgeräts 100 in **Fig. 2a** ausgeführt ist. Die Kontaktflächen 34 werden von Kontaktflächen 38 eines Befestigungselements 36 kontaktiert. Das Befestigungselement 36 weist Kontaktstifte 40 auf, die erheblich länger als die Kontaktstifte 40 in **Fig. 2b** ausgeführt sind. Das Schaltmodul 42 weist Führungskanäle 70 auf, durch die die Kontaktstifte 40 den Schalteinsatz 42 durchdringen können, um ein Zusatzmodul 60 auf der Rückseite des Schalteinsatzes 42 zu kontaktieren. Das Zusatzmodul 60 weist hierzu Kontaktbuchsen 68 auf. Somit kontaktiert das Funktionsmodul 28 des Abdeckrahmens 32 über das Befestigungselement 36 nicht den Schalteinsatz 42, sondern ein Zusatzmodul 60, das auf der Rückseite des Schalteinsatzes 42 angeordnet ist. Hierzu sind Kontaktstifte 40 durch den Schalteinsatz 42 durchgeführt.

In der **Fig. 4c** ist perspektivisch die Rückseite des Befestigungselements 36 mit den verlängerten Kontaktstiften 40 und denn Kontaktflächen 38 dargestellt.

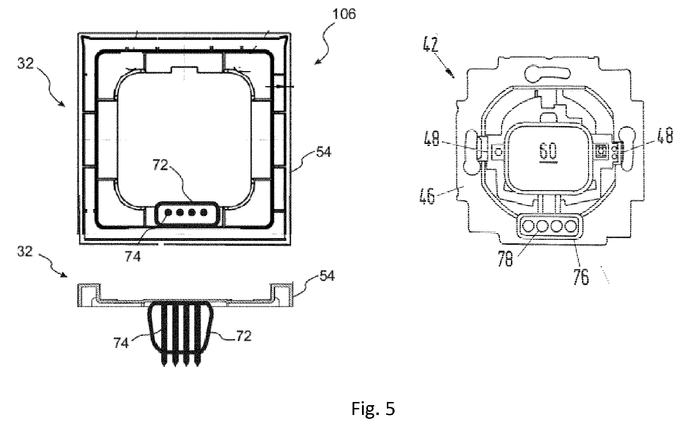

In der **Fig. 5** ist eine vierte Ausführungsform 106 eines erfindungsgemäßen Installationsgerätes dargestellt. Das Installationsgerät 106 umfasst einen einstückig ausgeführten Abdeckrahmen 32, an dem ein Stecker 72 mit Kontaktstiften 74 einstückig angeordnet ist, wobei der Stecker 72 beispielsweise an einem Zusatzmodul 28 angeordnet ist, das in den Abdeckrahmen 32 eingesteckt, eingeclipst oder angeklebt werden kann. Der Stecker 72 ist derart ausgeformt, dass er durch eine Ausnehmung eines Tragrahmens 46 eines Funktionseinsatzes 42 durchgreifen kann, um eine komplementäre Buchse 76 mit Kontaktbuchsenelementen 78 kontaktieren zu können. Die Buchse 76 kann beispielsweise an einem Zusatzmodul, das auf der Rückseite oder einem Seitenbereich eines Funktionseinsatzes 42 angeordnet sein kann, befestigt sein. Alternativ kann die Buchse 76 unmittelbar am Funktionseinsatz 42 angeformt sein. Der Abdeckrahmen 32 kontaktiert das Funktionsmodul 28 über eine Steckerverbindung direkt mit dem Funktionseinsatz 42.

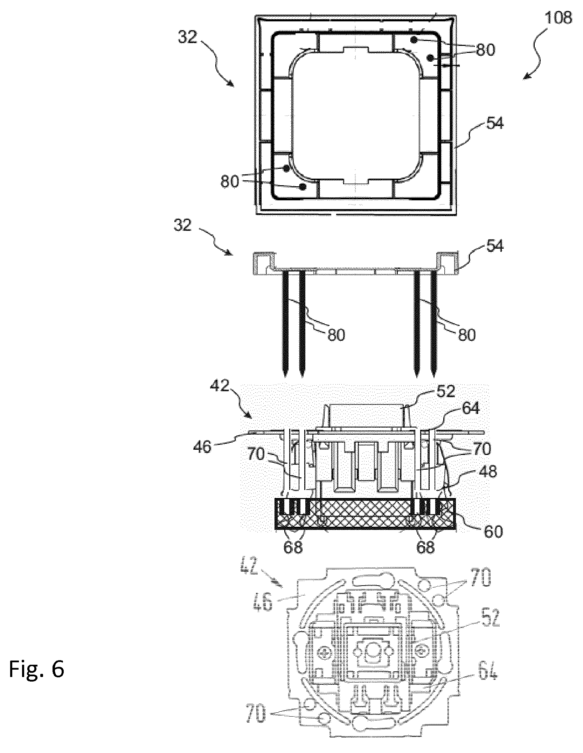

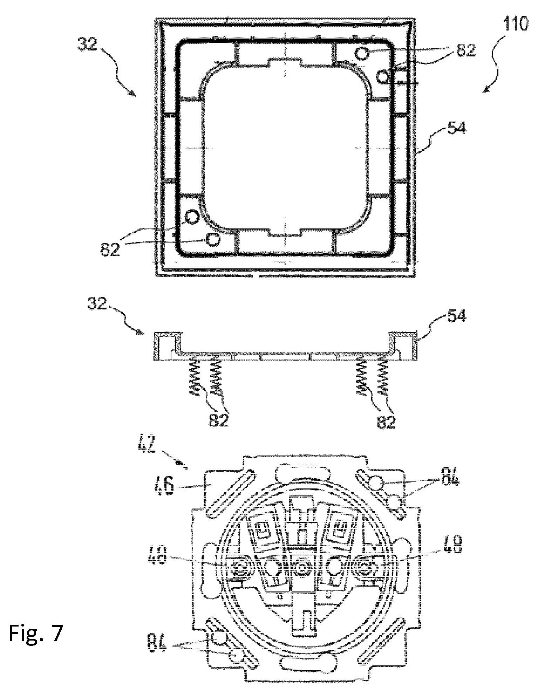

Die **Fig. 6** zeigt eine fünfte Ausführungsform 108 eines erfindungsgemäßen Installationsgeräts. In der **Fig. 6** sind im oberen Bereich die Hinterseite eines Abdeckrahmens 32 sowie ein Schnitt durch den Abdeckrahmen 32 dargestellt, wobei der Abdeckrahmen 32 mehrere Kontaktstifte 80 aufweist, die durch Führungskanäle 70 eines Funktionseinsatzes 42 durchgreifen können, um in Kontaktbuchsen 68 eines Zusatzmoduls 60 eine elektrische Verbindung zwischen einem Funktionsmodul 28 und dem Zusatzmodul 60 herzustellen. Der Abdeckrahmen 32 kann mechanisch durch die Kontaktstifte 80 am Funktionseinsatz 42 angeordnet sein, so dass optional auf ein Befestigungselement 36 verzichtet werden kann. Hierzu weist der Tragrahmen 70 entsprechende Ausnehmungen für Führungskanäle 70 der Kontaktstifte 80 auf, die isoliert ausgeführt sind, um keinen Kurzschluss über den metallischen Tragrahmen 46 auszubilden.
In einer in **Fig. 7** dargestellten sechsten Ausführungsform 110 eines erfindungsgemäßen Installationsgerätes weist der Abdeckrahmen 32, der in Rückansicht und Schnittdarstellung abgebildet ist, auf seiner Rückseite mehrere Kontaktfedern 82 auf. Die Kontaktfedern 82 sind derart ausgebildet, dass sie beim Aufsetzen des Abdeckrahmens 32 auf einen Funktionseinsatz 42 entsprechend auf dem Tragrahmen 46 angeordnete Kontaktflächen 84 kontaktieren. Die Kontaktfedern 82 können so angeordnet sein, dass sie unabhängig von der Anordnungsrichtung des Abdeckrahmens 32 auf dem Funktionseinsatz 42 die funktionsrichtigen Kontakte 84 kontaktieren. Der Tragrahmen 46 des Funktionseinsatzes 42 kann bevorzugt aus Kunststoff oder einem anderen nicht leitenden Material bestehen, so dass die Kontaktflächen 84 keinen Kurzschluss gegeneinander und gegen den Tragrahmen 46 ausbilden. Zur Befestigung des Abdeckrahmens 32 auf dem Funktionseinsatz 42 ist ein zentrales Abdeckelement, in diesem Beispiel ein zentrales Steckdosenabdeckelement, das mit einer Schraube befestigt wird, erforderlich, da die Kontaktfedern 82 keine mechanisch stabile Verbindung herstellen.

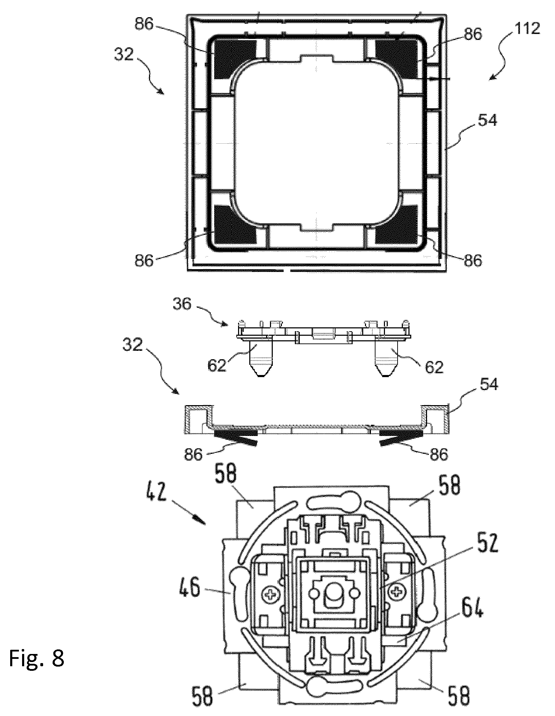

Schließlich ist in **Fig. 8** in einer siebten Ausführungsform 112 ein Abdeckrahmen 32 mit Kontaktflächen 86 dargestellt, wobei die Kontaktflächen 86 auf der Rückseite des Abdeckrahmens 32 jeweils in Eckbereichen des Rücksprungs des Abdeckrahmens 32 angeformt sind. Die Kontaktflächen 86 sind als Blattfedern ausgeformt, und weisen jeweils eine zum Funktionseinsatz 42 hin federnde Teilfläche auf, die lagerichtig auf entsprechend ausgeformte Kontaktflächen 58 des Funktionseinsatzes 42 aufsetzen können. Die Kontaktflächen 58 sind am nicht leitenden Tragrahmen 46 des Funktionseinsatzes 42 angeformt. Der Funktionseinsatz 42 kann ein Schaltereinsatz sein, der eine Wippe 52 aufweist. Zur Befestigung des Abdeckrahmens 32 auf dem Funktionseinsatz 42 kann ein Befestigungselement 36 des Standes der Technik eingesetzt werden, das über Klemmzungen 62 in entsprechende Zungenaufnahmen 64 klemmend den Abdeckrahmen 32 am Funktionseinsatz 42 befestigt, und durch formkongruentes Kontaktieren der Kontaktflächen 86 des Abdeckrahmens 32 mit Kontaktflächen 58 des Funktionseinsatzes 42 eine elektrische Verbindung herstellen, um ein nicht dargestelltes Zusatzmodul 28 im Abdeckrahmen kontaktieren zu können.

### Bezugszeichenliste

- 10: Bedienungselement, Wippbedienelement
- 12: Dichtung
- 14: Abdeckrahmen mit elektrischem Funktionsmodul
- 16: Schalteinsatz, Kippschaltereinsatz, Funktionseinsatz
- 18: Gehäuseteil, Doseneinsatz, Unterputzeinsatz, Geräteeinsatz
- 20: Leitungseinführungen, Öffnungen für Leitungen
- 22: Halterungen zur Fixierung des Funktions- oder Schalteinsatzes
- 24: Bajonett-Schnellverschluss
- 26: Anschlussleitungen für Funktionsmodul
- 28: Funktionsmodul
- 30: Feuchtraum-Schalter
- 32: Abdeckrahmen mit Funktionsmodul
- 34: Abdeckrahmen-Kontaktfläche auf Oberseite
- 36: Befestigungselement
- 38: Befestigungselement-Kontaktfläche
- 40: Befestigungselement-Kontaktstift
- 42: Funktionseinsatz, Schalteinsatz
- 44: Kontaktbuchse
- 46: Tragrahmen
- 48: Befestigungskrallen
- 50: Kontaktklemme
- 52: Wippe
- 54: Rahmenrand
- 56: Befestigungselement-Kontaktfedern
- 58: Funktionseinsatz-Kontaktfläche
- 60: Funktionseinsatz-Zusatzmodul
- 62: Klemmzunge
- 64: Zungenaufnahme
- 66:
- 68: Zusatzmodul-Kontaktbuchse
- 70: Führungskanal
- 72: Stecker
- 74: Kontaktstift
- 76: Buchse
- 78: Kontaktbuchse
- 80: Abdeckrahmen-Kontaktstift
- 82: Abdeckrahmen-Kontaktfeder
- 84: Funktionseinsatz-Kontaktfläche
- 86: Abdeckrahmen-Kontaktfläche auf Unterseite
- 88:
- 90:
- 92:
- 94:
- 96:
- 98:
- 100: erste Ausführungsform eines Installationsgeräts
- 102: zweite Ausführungsform eines Installationsgeräts
- 104: dritte Ausführungsform eines Installationsgeräts
- 106: vierte Ausführungsform eines Installationsgeräts
- 108: fünfte Ausführungsform eines Installationsgeräts
- 110: sechste Ausführungsform eines Installationsgeräts
- 112: siebte Ausführungsform eines Installationsgeräts

## Patentansprüche

1. Installationsgerät (100, 102, 104, 106, 108, 110, 112) der Haus- oder Gebäudeinstallationstechnik mit erweiterter Funktionalität für die Gebäudesystemtechnik mit einem Schalt- oder Funktionseinsatz (42), einem Gehäuseteil (18), Kontaktklemmen (50) für einen Anschluss an externe Anschlussleitungen und einem Abdeckrahmen (32), **dadurch gekennzeichnet, dass** wenigstens ein elektrisches Funktionsmodul (28) vom Abdeckrahmen (32) aufgenommen ist und der Abdeckrahmen (32) mit dem Schalt- oder Funktionseinsatz (42) durch elektrische als Kontaktstifte (40, 74, 80), Kontaktfedern (56, 82) oder Kontaktflächen (34, 86), ausgebildete Kontaktmittel durch Aufsetzen und Befestigen des Abdeckrahmens (32) auf dem Funktionseinsatz (42) elektrisch kontaktiert ist.

2. Installationsgerät (100, 102, 104, 106, 108, 110, 112) nach Anspruch 1, **dadurch gekennzeichnet, dass** die Kontaktmittel eine mechanische Verbindung von Abdeckrahmen (32) und Funktionseinsatz (42) herstellen.

3. Installationsgerät (100, 102, 104, 106, 108, 110, 112) nach Anspruch 1 oder 2, **dadurch gekennzeichnet, dass** der Abdeckrahmen (32) durch ein Befestigungselement (36) am Funktionseinsatz (42) befestigt ist, wobei das Befestigungselement (36) Kontaktmittel umfasst.

4. Installationsgerät (100, 102, 104, 106, 108, 110, 112) nach Anspruch 3, **dadurch gekennzeichnet, dass** der Abdeckrahmen (32) zumindest zwei Kontaktflächen (34) auf einer dem Funktionseinsatz (42) abgewandten Seite aufweist, und das Befestigungselement (36) komplementär hierzu mit den AbdeckrahmenKontaktflächen (34) kontaktierbare Befestigungselement-Kontaktflächen (38) auf einer dem Funktionseinsatz (42) zugewandten Seite aufweist, wobei das Befestigungselement (36) zum Befestigen in den Abdeckrahmen (32) ein- oder aufsetzbar und mechanisch mit dem Funktionseinsatz (42) verbindbar ist.

5. Installationsgerät (100, 102, 104, 106, 108, 110, 112) nach Anspruch 3 oder 4 **dadurch gekennzeichnet, dass** das Befestigungselement (36) zumindest zwei Befestigungselement-Kontaktstifte (38) aufweist, die mit Kontaktbuchsen (44, 68) des Funktionseinsatzes (42) oder eines am Funktionseinsatz (42) anbringbaren Zusatzmodul (60) kontaktierbar sind, oder dass das Befestigungselement (36) zumindest zwei Befestigungselement-Kontaktfedern (56) aufweist, die mit Kontaktflächen (58) des Funktionseinsatzes (42) oder eines am Funktionseinsatz (42) anbringbaren Zusatzmodul (60) kontaktierbar sind.

6. Installationsgerät (100, 102, 104, 106, 108, 110, 112) nach einem der Ansprüche 3 bis 5, **dadurch gekennzeichnet, dass** das Befestigungselement (36) mittels zumindest einer Klemmzunge (62) oder einer Schraube mit dem Funktionseinsatz (42) befestigbar ist, wobei die Klemmzunge (62) und/oder die Schraube Teil eines Kontaktmittels ist.

7. Installationsgerät (100, 102, 104, 106, 108, 110, 112) nach Anspruch 1 oder 2, **dadurch gekennzeichnet, dass** der Abdeckrahmen (32) einen mechanisch integrierten, insbesondere einstückig angeformten Stecker (72) aufweist, der beim Befestigen des Abdeckrahmens (32) eine Buchse (76) des Funktionseinsatzes (42) oder eines Zusatzmoduls (60) kontaktiert.

8. Installationsgerät (100, 102, 104, 106, 108, 110, 112) nach Anspruch 1 oder 2, **dadurch gekennzeichnet, dass** der Abdeckrahmen (32) zumindest zwei in Richtung Funktionseinsatz (42) angeformte Kontaktstifte (80) umfasst, die mit Kontaktbuchsen (44, 68) des Funktionseinsatzes (42) oder eines am Funktionseinsatz (42) anbringbaren Zusatzmoduls (60) kontaktierbar sind, oder dass der Abdeckrahmen (32) zumindest zwei in Richtung Funktionseinsatz (42) gerichtete Kontaktfedern (82) aufweist, die mit Kontaktflächen (84) des Funktionseinsatzes (42) oder eines am Funktionseinsatz (42) anbringbaren Zusatzmoduls (60) kontaktierbar sind, oder dass der Abdeckrahmen (32) zumindest zwei in Richtung Funktionseinsatz (42) angeordnete Kontaktflächen (82) aufweist, die mit Kontaktflächen (58) des Funktionseinsatzes (42) oder eines am Funktionseinsatz (42) anbringbaren Zusatzmoduls (60) kontaktierbar sind.

9. Installationsgerät (100, 102, 104, 106, 108, 110, 112) nach einem der vorherigen Ansprüche, **dadurch gekennzeichnet, dass** die Kontaktmittel in einem Spritzgießverfahren am Abdeckrahmen (32) und/oder am Befestigungselement (36) angeformt sind.

10. Installationsgerät (100, 102, 104, 106, 108, 110, 112) nach einem der vorherigen Ansprüche, **dadurch gekennzeichnet, dass** ein Tragrahmen (46) des Funktionseinsatzes (42) zumindest bereichsweise aus nichtleitendem Material besteht.

11. Installationsgerät (100, 102, 104, 106, 108, 110, 112) nach einem der vorherigen Ansprüche, **dadurch gekennzeichnet, dass** das Installationsgerät (100, 102, 104, 106, 108, 110, 112) als Unterputz- oder Aufputzschalter, -taster, -dimmer oder -steckdose ausgeführt ist.

12. Abdeckrahmen (32) für ein Installationsgerät (100, 102, 104, 106, 108, 110, 112) der Haus- oder Gebäudeinstallationstechnik nach einem der vorgenannten Ansprüche, insbesondere 1-fach, 2-fach oder Mehrfach-Abdeckrahmen, umfassend ein Funktionsmodul (28) für Zusatzfunktionen der Gebäudesystemtechnik und Kontaktmittel zum Kontaktieren an einem Funktionseinsatz (42).

13. Funktionseinsatz (42) für ein Installationsgerät (100, 102, 104, 106, 108, 110, 112) der Haus- oder Gebäudeinstallationstechnik nach einem der vorgenannten Ansprüche, umfassend Kontaktmittel zum elektrischen Kontaktieren eines Abdeckrahmens (32) mit Funktionsmodul (28).
